# EUROPÄISCHE PATENTANMELDUNG

(11) **EP 0 621 099 A1**
(43) Veröffentlichungstag der Anmeldung: **26.10.1994**
(21) Anmeldenummer: 93117954.3
(22) Anmeldetag: 05.11.1993
(51) Int. Cl.: B23D 45/06, B23D 47/02, B27B 27/06, B23Q 16/00

(54) **Kreissäge**

(30) Priorität: 20.04.1993 DE 9305872 U
(71) Anmelder: Holzma-Maschinenbau GmbH, D-75365 Calw (DE)
(72) Erfinder: Jenkner, Erwin, D-71083 Herrenberg-Oberjesingen (DE); Sörgel, Rudolf, D-75385 Bad Teinach 4 (DE)
(74) Vertreter: Becker, Maria, Dipl.-Phys.

(57) **Zusammenfassung**

Die Erfindung betrifft eine Kreissäge mit einem unter Tisch fahrenden Sägeaggregat, mit einem Materialauflagetisch (10) und mit einem am Materialauflagetisch (10) in eine Betriebsstellung bringbaren Gehrungsanschlag (20). Um den Gehrungsanschlag (20) aus einer den normalen Arbeitslauf nicht störenden Ruhestellung einfach und schnell in eine Betriebsstellung zu bringen, ist vorgesehen, daß der im Bereich einer Aussparung (18) des Materialauflagetisches (10) befindliche Gehrungsanschlag (20) in dieser heb- und senkbar ist.

## Beschreibung

Die Erfindung betrifft eine Kreissäge der im Oberbegriff des Anspruchs 1 angegebenen Art.

Derartige Kreissägen, insbesondere Druckbalkensägen, also Sägen, bei denen dem Materialauflagetisch im Bereich der Schnittlinie des Sägeaggregats ein Druckbalken zugeordnet ist, um das aufzuteilende Material, insbesondere Platten oder Plattenstapel festzuklemmen, werden zusammen mit automatischen Plattenzuführ- und -vorschubeinrichtungen, die insbesondere programmgesteuert arbeiten, betrieben.

Während normaler Aufteilarbeiten ist der gesamte Arbeitsbereich des Materialauflagetisches für die Zuführung des aufzuteilenden Materials und für die Abnahme der aufgeteilten Zuschnitte freizuhalten. Für bestimmte Arbeiten wird jedoch ein Werkstückanschlag benötigt, der in seiner Winkelstellung zur Schnittlinie des Sägeaggregats verschiedene Winkelpositionen einnehmen kann, um an einer derartigen Säge auch entsprechende Gehrungsschnitte durchführen zu können.

Bei einer bekannten, druckschriftlich nicht nachweisbaren Kreissäge ist der erforderliche Gehrungsanschlag, der vorzugsweise in unmittelbarer Nähe der Bedienposition an der Säge angeordnet sein soll, als Zusatzteil vorgesehen, das bei Bedarf auf den Maschinentisch aufgesetzt und fixiert wird. Nach dem Gebrauch muß der Gehrungswinkel dann wieder abgebaut werden, da bei normalen Arbeiten, also beim Aufteilen von Platten oder Plattenstapeln der Maschinentisch auf seiner ganzen Länge und Breite von dem entsprechenden Plattenmaterial belegt ist.

Dieses Aufsetzen und Abnehmen des Gehrungswinkels ist zeitaufwendig. Da normalerweise nur wenige Gehrungsschnitte durchgeführt werden müssen, wird dieser Zeitaufwand als störend empfunden.

Der Erfindung liegt daher die Aufgabe zugrunde, eine weitere Kreissäge der eingangs genannten Art bereitzustellen, die insbesondere einfach und schnell für Gehrungsschnitte umrüstbar ist.

Erfindungsgemäß wird diese Aufgabe bei einer Kreissäge der eingangs genannten Art durch die kennzeichnenden Merkmale des Anspruchs 1 gelöst.

Erfindungsgemäß wird der zusätzliche, in seiner Winkelposition zur Schnittlinie einstellbare Anschlag so an der Säge angeordnet, daß er aus einer unterhalb der Auflageebene des Materialauflagetisches liegenden Ebene in seine Betriebsstellung oberhalb dieser Auflageebene bringbar ist und nach Gebrauch wieder in seine Ruhestellung abgesenkt werden kann. Hierdurch wird erreicht, daß der Anschlag, wenn er nicht benötigt wird, in einer neutralen den normalen Arbeitsablauf nicht störenden Ruhestellung angeordnet ist, aus der er durch eine einfache Verschiebebewegung in seine Betriebsstellung bringbar ist.

Besonders vorteilhaft ist es dabei, wenn diese Verschiebebewegung, die senkrecht, entlang einer schieben Ebene, als Schwenkbewegung oder als Kombination von translatorischen und rotatorischen Bewegungen erfolgen kann, von einer Stellantriebsvorrichtung bewirkt wird, die den Gehrungsanschlag beaufschlagt.

Der Einsatz einer motorischen Stellantriebsvorrichtung hat dabei den Vorteil, daß die Verschiebung über entsprechende Schalter, z. B. Drucktaster am Bedienungspanel ausgelöst werden kann. Dies ermöglicht es der Bedienungsperson, den Gehrungsanschlag schnell und großen Aufwand in seine Betriebsstellung anzuordnen und nach Gebrauch auch wieder zu entfernen. Hierdurch wird die Wirtschaftlichkeit der erfindungsgemäßen Kreissäge wesentlich erhöht, da Gehrungsschnitte bereits innerhalb eines Aufteilzykluses mit durchgeführt werden können, ohne daß der eigentliche Aufteilzyklus dadurch wesentlich beeinträchtigt wird.

Insbesondere ist es nicht notwendig, wie bisher, zunächst die Platten parallel aufzuteilen, dann, nachdem die Säge leergefahren ist, den Gehrungsanschlag zu montieren, um anschließend die entsprechenden Gehrungsschnitte durchzuführen.

Besonders vorteilhaft ist es, wenn der Gehrungsanschlag entsprechend Anspruch 6 in seiner unteren Stellung im wesentlichen parallel zur Schnittlinie verfahrbar ist, da er auf diese Weise unter dem Materialauflagetisch verschwindet und die Aussparung im Tisch freigibt, so daß eine Bedienungsperson unbehindert die Maschine in üblicher Weise bedienen kann.

Die Erfindung wird im folgenden beispielsweise anhand der Zeichnung näher erläutert. In dieser zeigt:
- Figur 1: eine schematische Draufsicht auf eine Kreissäge mit daran angeordnetem Gehrungsanschlag,
- Figur 2: eine schematische Draufsicht entsprechend Figur 1, wobei der Gehrungsanschlag in seiner neutralen Ruhestellung ist,
- Figur 3: eine schematische, teilweise Seitenansicht der Kreissäge nach Figur 1 mit in seiner Betriebsstellung befindlichen Gehrungsanschlag und
- Figur 4: eine Ansicht entsprechend Figur 3, wobei der Gehrungsanschlag in einer unteren Stellung ist.

In den verschiedenen Figuren der Zeichnung sind einander entsprechende Bauteile mit gleichen Bezugszeichen versehen.

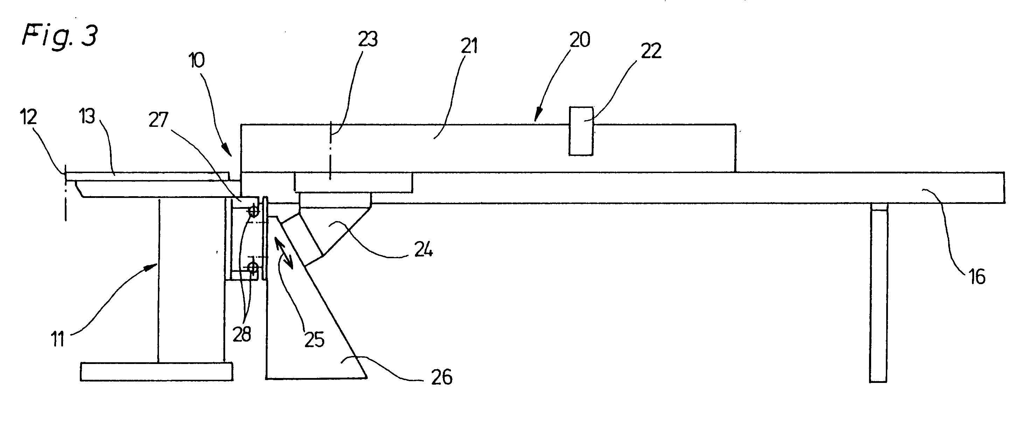

Die erfindungsgemäße Kreissäge weist einen Materialauflagetisch 10 auf, der an einem Maschinengestell 11 (Figur 3) gehalten ist und unter dem ein Sägeaggregat längs einer Schnittlinie 12 in bekannter Weise verfahrbar ist. Den der Schnittlinie 12 benachbarten Abschnitten 13 des Materialauflagetisches 10, die sich über die gesamte Länge der Schnittlinie 12 erstrecken, ist ein Druckbalken 14 zugeordnet, der an Rahmen 15 oder anderen geeigneten Führungsmitteln des Maschinengestells 11 gelagert ist. Der Druckbalken 14 dient dazu, zu sägendes Material, insbesondere aufzuteilende Platten oder Plattenstapel fest gegen die Abschnitte 13 des Materialauflagetisches 10 zu drücken, um ein Verrutschen während des Sägens zu verhindern.

An die sich parallel zur Schnittlinie 12 erstreckenden Abschnitte 13 des Materialauflagetischs 10 schließen sich vorzugsweise als Luftkissentische 16 ausgebildete reibungsarme Tischabschnitte des Materialauflagetischs 10 an. Zwischen diesen Luftkissentischen 16 ist eine erste und eine zweite Aussparung 17 bzw. 18 vorgesehen, die einer Bedienungsperson den Zugang zum Sägebereich ermöglichen, so daß auch kleine Plattenzuschnitte bequem abgenommen werden können. Der übliche Arbeitsplatz einer Bedienungsperson befindet sich in der ersten Aussparung 17 und ist bei 19 angedeutet.

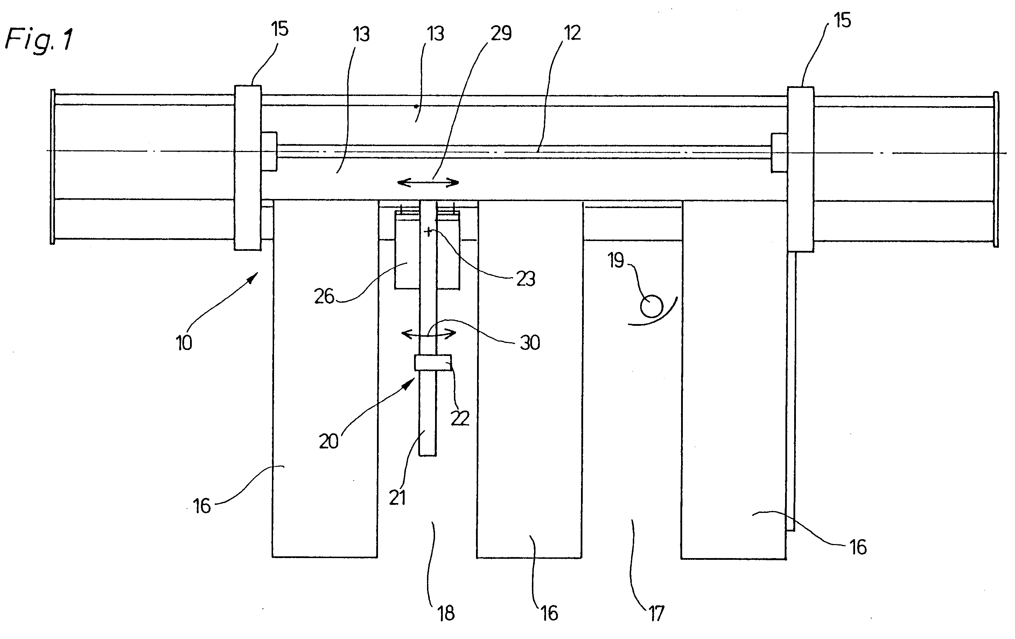

In der zweiten Aussparung 18 ist ein Gehrungsanschlag 20 angeordnet, der ein Lineal 21 und einen darauf in Längsrichtung verschiebbaren Längenanschlag 22 aufweist. Wie in Figur 1 und 3 dargestellt, ist der Gehrungsanschlag 20 um eine zur Auflageebene des Materialauflagetisches 10 senkrechte Drehachse 23 schwenkbar, um den Winkel zwischen dem Lineal 20 und der Schnittlinie 12 entsprechend einem gewünschten Gehrungsschnitt einstellen zu können.

Der Gehrungsanschlag 20 ist dabei drehbar an einem Lagerschlitten 24 gehalten, der längs einer schiefen Ebene verschiebbar (Pfeil 25) an einer Konsole 26 gelagert ist, um eine Heb- und Senkbewegung des Gehrungsanschlags 20 zu ermöglichen.

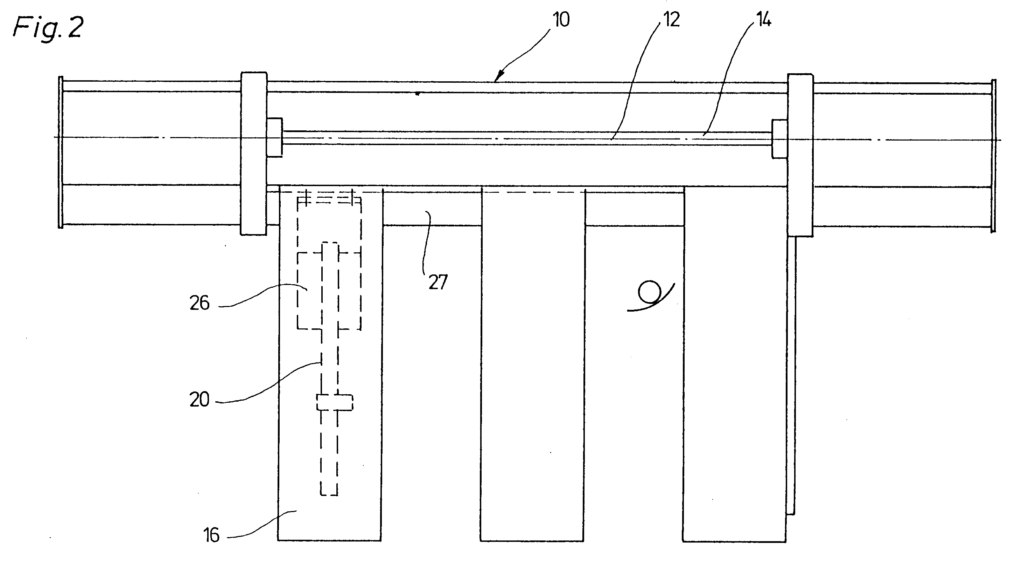

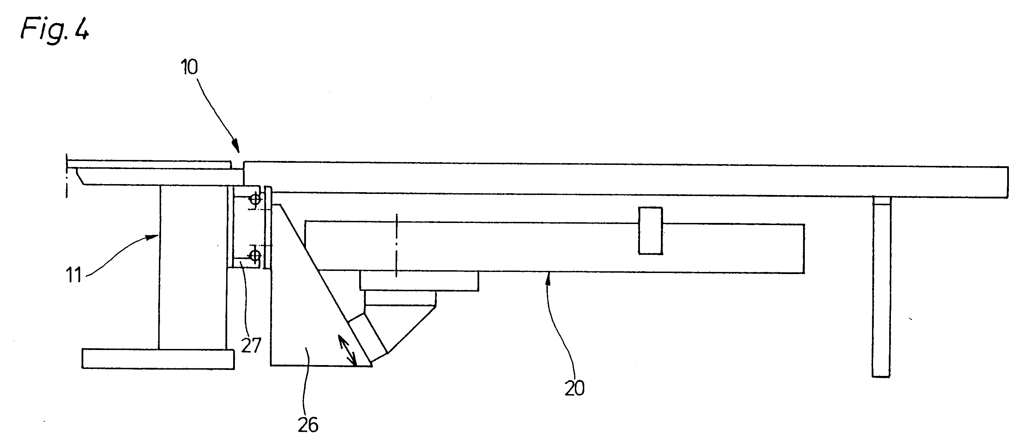

Die Konsole 26 ist ihrerseits an einer sich parallel zur Schnittlinie 12 erstreckenden Tragschienenanordnung 27 mittels geeigneter Wälzkörper 28 verfahrbar angeordnet, so daß der in seiner in Figur 4 dargestellten unteren Stellung befindliche Gehrungsanschlag 20 aus der in Figur 1 gezeigten Lage im Bereich der zweiten Aussparung 18 in seine in Figur 2 dargestellte neutrale Ruhestellung unterhalb eines Luftkissentischs 16 verschiebbar ist.

Im folgenden wird die Funktionsweise der beschriebenen Kreissäge erläutert.

Während des normalen Aufteilbetriebes, werden die aufzuteilenden Platten oder Plattenstapel der Kreissäge z. B. mittels einer üblichen Plattenzuführ- und -einschubvorrichtung, die einen Plattenauflagetisch und eine Programmschiebeanordnung umfaßt, programmgesteuert zugeführt. Der Gehrungsanschlag 20 befindet sich dabei in der in Figur 2 dargestellten neutralen Ruhestellung unterhalb eines der Luftkissentische 16, so daß die Aussparungen 17, 18 im Materialauflagetisch 10 für eine Bedienungsperson frei zugänglich sind, so daß keine Behinderung bei der üblichen Bedienung der Maschine auftritt.

Sind nach Beendigung oder während eines PlattenaufteilZykluses Gehrungsschnitte erforderlich, so kann die Bedienungsperson in einfacher Weise den Gehrungsanschlag aus seiner neutralen Ruhestellung (Figur 2) in seine in Figur 1 und 3 dargestellte Betriebsstellung bringen. Dies kann zwar von Hand erfolgen, bevorzugt ist jedoch vorgesehen, daß die parallel zur Schnittlinie 12 erfolgende Verschiebung von Konsole 26 und Gehrungsanschlag 20, die mit dem Pfeil 29 angedeutet ist, mittels eines nicht näher dargestellten Stellantriebs motorisch getrieben erfolgt. In entsprechender Weise wird der Lagerschlitten 24 von einem Stellmotor oder einer Stellantriebsvorrichtung aus seiner abgesenkten Stellung in die in Figur 3 dargestellte Betriebsstellung angehoben. Sobald sich der Gehrungsanschlag 20 in seiner Betriebsstellung befindet, wird er entsprechend dem Pfeil 30 so weit geschwenkt, daß er die dem gewünschten Gehrungsschnitt entsprechende Winkelstellung einnimmt.

Anschließend wird noch der Längenanschlag 22 eingestellt. Nun können die gewünschten Gehrungsschnitte durchgeführt werden.

Sobald der Gehrungsanschlag nicht mehr benötigt wird, wird sein Lineal 21 senkrecht zur Schnittlinie 12 ausgerichtet. Daraufhin wird er abgesenkt und dann unter den entsprechenden Luftkissentisch 16 verschoben.

Bei einem motorisch verschiebbaren Gehrungsanschlag 20 können die einzelnen Antriebe über entsprechende Drucktaster am Bedienungspanel der Krelssäge durchgeführt werden, so daß die Bedienungsperson ihren üblichen Arbeitsplatz 19, von dem aus das Bedienungspanel zugänglich ist, nicht zu verlassen braucht.

Dabei ist es besonders vorteilhaft, wenn auch die Schwenkbewegung des Gehrungsanschlags mittels eines steuerbaren Drehantriebs durchgeführt werden kann, die in den jeweils eingestellten Winkellagen arretierbar ist.

Das Anheben und Absenken des Gehrungsanschlags 20 muß nicht notwendigerweise längs einer schiefen Ebene vorgenommen werden. Es kann auch durch ein Schwenken des Lineals 21 oder ein senkrechtes Heben und Senken erfolgen.

## Patentansprüche

1. Kreissäge mit einem unter Tisch fahrendem Sägeaggregat, mit einem Materialauflagetisch und mit einem am Materialauflagetisch in eine Betriebsstellung bringbaren Gehrungsanschlag,
**dadurch gekennzeichnet,**
daß der im Bereich einer Aussparung (18) des Materialauflagetischs (10) befindliche Gehrungsanschlag in dieser heb- und senkbar ist, um aus seiner Betriebsstellung in eine unterhalb der Auflageebene des Materialauflagetisches (10) vorgesehene Stellung und zurück bewegt werden zu können.

2. Kreissäge nach Anspruch 1, dadurch gekennzeichnet, daß der Gehrungsanschlag (20) aus seiner unterhalb der Auflageebene des Materialauflagetisches (10) vorgesehenen Stellung senkrecht in seine Betriebsstellung hebbar ist.

3. Kreissäge nach Anspruch 1, dadurch gekennzeichnet, daß der Gehrungsanschlag (20) aus seiner unterhalb der Auflageebene des Materialauflagetisches (10) vorgesehenen Stellung längs einer schiefen Ebene in seine Betriebsstellung hebbar ist.

4. Kreissäge nach Anspruch 1, dadurch gekennzeichnet, daß der Gehrungsanschlag (20) schwenkbar am Materialauflagetisch (10) oder an einem diesen tragenden Maschinengestell (11) gelagert ist und aus seiner unterhalb der Auflageebene des Materialauflagetisches (10) vorgesehenen Stellung in seine Betriebsstellung hochklappbar ist.

5. Kreissäge nach einem der vorhergehenden Ansprüche, dadurch gekennzeichnet, daß der Gehrungsanschlag (20) von einer Stellantriebsvorrichtung beaufschlagbar ist, um aus seiner Betriebsstellung in seine unter der Auflageebene des Materialauflagetisches (10) befindliche Stellung und zurück bewegbar ist.

6. Kreissäge nach einem der vorhergehenden Ansprüche, dadurch gekennzeichnet, daß der unterhalb der Auflageebene des Materialauflagetisches (10) befindliche Gehrungsanschlag (20) im wesentlichen parallel zum Fahrweg des Sägeaggregats verschiebbar ist.

7. Kreissäge nach einem der vorhergehenden Ansprüche, dadurch gekennzeichnet, daß der Gehrungsanschlag (20) an einer an einem den Materialauflagetisch (10) tragenden Maschinengestell (11) angebrachten Konsole (26) heb- und senkbar gehalten ist.

8. Kreissäge nach Anspruch 7, dadurch gekennzeichnet, daß die Konsole (26) im wesentlichen parallel zum Fahrweg des Sägeaggregats verschiebbar am Maschinengestell (11) gelagert ist.
